# EUROPEAN PATENT SPECIFICATION

(11) **EP 2 658 228 B1**
(45) Date of publication and mention of the grant of the patent: **06.06.2018**
(21) Application number: 13001752.8
(22) Date of filing: 05.04.2013
(51) Int. Cl.: G09G 5/14, H04M 1/725, G06F 3/14

(54) **Mobile terminal adapted to be connected to an external display and a method of controlling the same**
Mobiles Endgerät zum Anschließen an eine externe Anzeige und Ansteuerungsverfahren dafür
Terminal mobile adapté pour être connecté à un écran d'affichage externe et son procédé de commande

(30) Priority: 23.04.2012 KR 20120042124
(43) Date of publication of application: 30.10.2013
(73) Proprietor: LG Electronics, Inc., Seoul, 150-721 (KR)
(72) Inventor: Hwang, Keumsung, 153-801 Seoul (KR); KIM, Jieun, 153-801 Seoul (KR)
(74) Representative: Beyer, Andreas

(56) References cited:
- EP-A2- 2 428 947
- US-A1- 2012 088 548

## Description

### BACKGROUND

### 1. Field

A mobile terminal and a method of controlling the same are disclosed herein.

### 2. Background

Mobile terminals and methods of controlling the same are known. However, they suffer from various disadvantages.

US 2012/0088548 A1 relates to a mobile terminal and a display device that are connected to each other. One of at least two home screen images is selected from the display unit of the mobile terminal and displayed as a first screen image on the display unit of the mobile terminal. Information on the first screen image is received at the display device from the mobile terminal and is displayed (at the display device) as a second screen image. In addition, images corresponding to first to third home screen images can be displayed as the second screen image on the monitor of the display device.

It is an object of the present invention to provide a method of controlling a mobile terminal connected to an external display device achieving an increased clearness of the displayed information.

This object is solved by the present invention as defined in claims 1 and 10. Exemplary embodiments are defined in the dependent claims.

### BRIEF DESCRIPTION OF THE DRAWINGS

The embodiments will be described in detail with reference to the following drawings in which like reference numerals refer to like elements, wherein:
Figure 1 is a block diagram of a mobile terminal according to one embodiment of the present disclosure;
Figures 2A and 2B are views of a mobile terminal according to one embodiment of the present disclosure;
Figures 3A and 3B are diagrams illustrating exemplary configurations of connections among digital devices applicable to embodiments of the present disclosure;
Figure 4 is a flowchart of a process for displaying application windows of a plurality of applications via an external device according to one embodiment of the present disclosure;
Figure 5 is a flowchart of a process for displaying application windows of a plurality of applications via an external device according to one embodiment of the present disclosure;
Figures 6A to 6H are diagrams that illustrate a process for sharing active images of a plurality of applications in a mobile terminal with an external device according to one embodiment of the present disclosure;
Figures 7A to Figure 7D are diagrams that illustrate a process for controlling a display of execution screens for applications in a mobile terminal which are shared with an external device according to one embodiment of the present disclosure;
Figures 8A to 8D are diagrams that illustrate a process for controlling a display of execution screens for applications in a mobile terminal which are shared with an external device according to one embodiment of the present disclosure;
Figures 9A to 9C are diagrams that illustrate a method of sharing an active image for an application according to one embodiment of the present disclosure;
Figures 10A to 10C are diagrams that illustrate a method of controlling an overlay window in a mobile terminal according to one embodiment of the present disclosure;
Figures 11A to 11D are diagrams that illustrate a method of changing an arrangement state of an overlay window via a prescribed user interface in a mobile terminal according to one embodiment of the present disclosure;
Figures 12A to 12C are diagrams that illustrate a method of changing an overlay window arrangement state in a mobile terminal using a sensing unit according to one embodiment of the present disclosure;
Figures 13A to 13D are diagrams that illustrate a method of sharing an image of a second terminal from a mobile terminal with an external device according to one embodiment of the present disclosure; and
Figures 14A to 14D are diagrams illustrating a method of controlling image sharing between mobile terminal and an external device according to another embodiment of the present disclosure.

### DETAILED DESCRIPTION

In the following detailed description, reference is made to the accompanying drawing figures which form a part hereof, and which show by way of illustration specific embodiments of the disclosure. It is to be understood by those of ordinary skill in this technological field that other embodiments may be utilized, and structural, electrical, as well as procedural changes may be made without departing from the scope of the present disclosure. Wherever possible, the same reference numbers will be used throughout the drawings to refer to the same or similar parts.

As used herein, the suffixes 'module', 'unit' and 'part' are often used for elements in order to facilitate discussion of the disclosure. Therefore, significant meanings or roles are not given to the suffixes themselves and it is understood that the 'module', 'unit' and 'part' can be used together or interchangeably.

Generally, terminals can be classified into mobile/portable terminals and stationary terminals. The mobile terminals can be further classified into handheld terminals and vehicle mount terminals according to possibility of user's direct portability.

As functions of the terminal becomes increasingly diversified, the terminal may be implemented as a multimedia player provided with composite functions such as photographing of photos or videos, playback of music or video files, game play, broadcast reception, or the like, for example. To support these increased functions of the terminal, improvements to structural and/or software aspects of the terminal may be required.

An image sharing function may be provided to display an image displayed in a mobile terminal on an external display device connected to the mobile terminal. Since the image sharing function is generally performed in a manner that a screen image currently displayed in a mobile terminal is duplicated identically on an external device, the image sharing may be referred to as "mirroring." However, the general mirroring method may have deficiencies when used to display a display screen of a mobile terminal on an external display. For example, a mobile terminal may simultaneously execute multiple applications, but due to size limitations of the mobile terminal, only the active application may be displayed on the display screen. The conventional mirroring method may reproduce only the image displayed on the mobile terminal, e.g., the application window for a single application, and hence it may be difficult to simultaneously display an application window of other active applications on the external display.

Accordingly, the present disclosure is directed to a mobile terminal and methods of controlling the same that substantially obviate one or more problems due to limitations and disadvantages of the related art. An object of the present disclosure is to provide a mobile terminal and method of controlling the same by which application windows of a plurality of applications can be simultaneously displayed in sharing a content image of a mobile terminal with an external device. Another object of the present disclosure is to provide a mobile terminal and method of controlling the same by which a plurality of applications of which active images will be shared with an external device can be selected more conveniently. A further object of the present disclosure is to provide a mobile terminal and a method of controlling the same by which a plurality of contents currently shared with an external device can be controlled more conveniently.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

Various types of terminals may be implemented using the various techniques discussed herein. Examples of such terminals include mobile as well as stationary terminals, such as mobile phones, user equipment, smart phones, DTV, computers, digital broadcast terminals, personal digital assistants, portable multimedia players (PMPs), navigators, or the like. Simply for discussion purposes, the description herein after will refer a mobile terminal, however, it should be appreciated that such teachings may equally apply to other types of terminals.

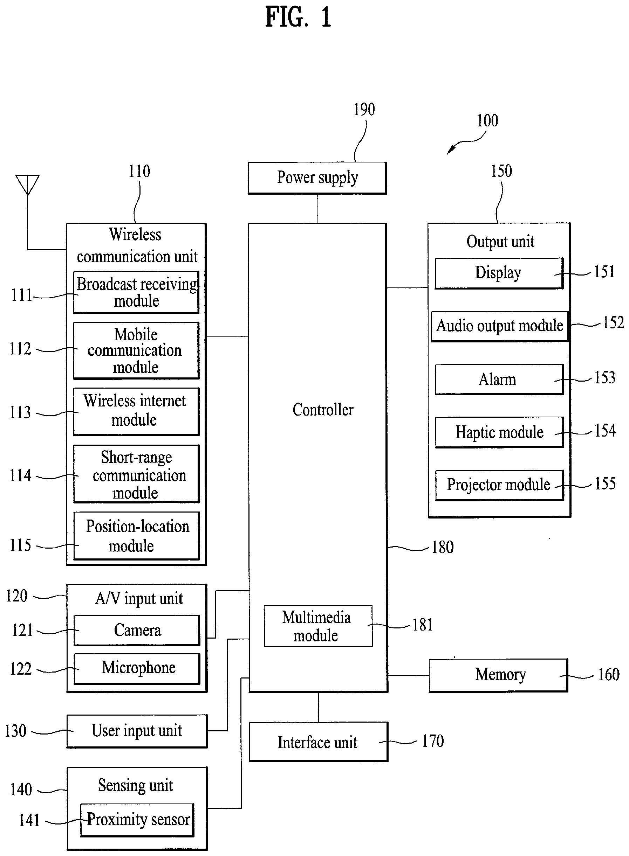

Figure 1 is a block diagram of a mobile terminal 100 in accordance with an embodiment of the present disclosure. Figure 1 shows the mobile terminal 100 having a wireless communication unit 110, an A/V (audio/video) input unit 120, a user input unit 130, a sensing unit 140, an output unit 150, a memory 160, an interface unit 170, a controller 180, a power supply unit 190, among other components. Mobile terminal 100 is shown having various components, but it should be understood that implementing all of the illustrated components is not a requirement, as greater or fewer components may alternatively be implemented.

The wireless communication unit 110 may typically include one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115, or the like.

The broadcast receiving module 111 receives a broadcast signal and/or broadcast associated information from an external broadcast managing server via a broadcast channel. The broadcast channel may include a satellite channel and a terrestrial channel. The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. This broadcast associated information can also be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured to be suitable for other broadcasting systems as well as the above-identified digital broadcasting systems.

The broadcast signal and/or broadcast associated information received by the broadcast receiving module 111 may be stored in a suitable device, such as a memory 160.

The mobile communication module 112 may transmit/receive wireless signals to/from one or more network entities (e.g., base station, external terminal, server, etc.). Such wireless signals may represent audio, video, and data according to text/multimedia message transceiving, among others.

The wireless Internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), LTE (Long Term Evolution) or the like.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 may identify or otherwise obtain the location of the mobile terminal 100. If desired, this module may be implemented with a global positioning system (GPS) module.

Referring still to Figure 1, the audio/video (A/V) input unit 120 is shown configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. Typically, the processed image frames can be displayed on the display 151.

The image frames processed by the camera 121 can be stored in the memory 160 or can be externally transmitted via the wireless communication unit 110. Optionally, two or more cameras 121 can be provided to the mobile terminal 100 according to the environment in which the terminal used to according to user needs.

The microphone 122 receives an external audio signal while the portable device is in a particular mode, such as phone call mode, recording mode and voice recognition mode. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, or the like.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100, or the like.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. If desired, the sensing unit 140 can include a proximity sensor 141.

The output unit 150 generates output relevant to the senses of sight, hearing, touch or the like. In some cases, the output unit 150 may include the display 151, an audio output module 152, an alarm unit 153, a haptic module 154, a projector module 155, or the like.

The display 151 may typically be implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using, for example, a liquid crystal display (LCD), a thin film transistor-liquid crystal display (TFT-LCD), an organic light-emitting diode display (OLED), a flexible display, a three-dimensional display or another appropriate type of display. The mobile terminal 100 may include one or more of such displays.

Some of the above displays can be implemented in a transparent or optical transmissive type, which can be named a transparent display. As a representative example for the transparent display, there is TOLED (transparent OLED) or the like. A rear configuration of the display 151 can be implemented in the optical transmissive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces (e.g., front surface and rear surface) of the mobile terminal 100.

In the case where the display 151 and a sensor for detecting a touch action (hereinafter also referred to a 'touch sensor') configures a mutual layer structure (hereinafter also referred to a 'touchscreen'), the user can use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

With continued reference to Figure 1, a proximity sensor can be provided to an internal area of the mobile terminal 100 enclosed by the touchscreen or proximate to the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one or more of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor, or the like. When the touchscreen includes the electrostatic capacity proximity sensor, it may also be configured to detect the proximity of a pointer using a variation of electric field according to the proximity of the pointer. In this scenario, the touchscreen (touch sensor) can be classified as a proximity sensor.

In the following description, for clarity, an action that a pointer approaches without contacting with the touchscreen to be recognized as located on the touchscreen is referred to as 'proximity touch' while an action that a pointer actually touches the touchscreen may be referred to as a 'contact touch.' The meaning of the position on the touchscreen proximity-touched by the pointer refers to the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). In addition, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode, or the like, to output audio data which is received from the wireless communication unit 110 or is stored in the memory 160. During operation, the audio output module 152 may output audio relating to a particular function (e.g., call received, message received, etc.). The audio output module 152 may be implemented using one or more speakers, buzzers, or another appropriate type of audio producing devices, and combinations thereof.

The alarm unit 153 may output a signal for announcing the occurrence of a particular event associated with the mobile terminal 100. Typical events may include a call received event, a message received event a touch input received event or the like. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device or the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display 151, on an external screen or wall according to a control signal of the controller 180.

In particular, the projector module 155 can include a light source generating light (e.g., laser) for projecting an image externally, an image producing element for producing an image to output externally using the light generated from the light source, and a lens for enlarging the image for output externally at predetermined focus distance. The projector module 155 can further include a device for adjusting an image projected direction by mechanically moving the lens or the whole module.

The projector module 155 can be classified into a CRT (cathode ray tube) module, an LCD (liquid crystal display) module, a DLP (digital light processing) module, or the like, according to a device type of a display means. In particular, the DLP module is operated by the mechanism of enabling the light generated from the light source to reflect on a DMD (digital micro-mirror device) chip and can be advantageous for the downsizing of the projector module 151.

The projector module 155 may be provided in a length direction of a lateral, front or backside direction of the mobile terminal 100. It should be appreciated that the projector module 155 can be provided on any appropriate portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other appropriate type of memory or data storage device. And, the mobile terminal 100 is able to operate in association with a web storage for performing a storage function of the memory 160 on the Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identity Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically may control the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such feature may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

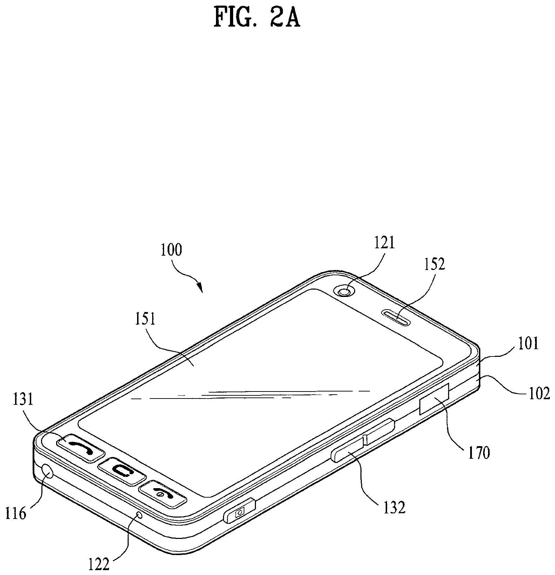

Figure 2A is a front perspective view of a mobile terminal according to various embodiments of the present disclosure. The mobile terminal 100 is shown as a bar type terminal body, but the mobile terminal may alternatively be implemented using other configurations such as folder-type, slide-type, rotational-type, swing-type, combinations thereof, or the like. For clarity, further disclosure will primarily relate to a bar-type mobile terminal 100, but such teachings apply equally to other types of mobile terminals.

Referring still to Figure 2A, the mobile terminal 100 may include a case (casing, housing, cover, etc.) configuring an exterior thereof. The case is shown divided into a front case 101 and a rear case 102. Various electric/electronic parts are positioned or otherwise located in a space or cavity provided between the front and rear cases 101 and 102. Optionally, at least one middle case can be further provided between the front and rear cases 101 and 102. The cases 101 and 102 may be formed by injection molding of synthetic resin or they can be formed of metal substance such as stainless steel (STS), titanium (Ti), or the like, for example.

A display 151, an audio output unit 152, a camera 121, user input units 130/131 and 132, a microphone 122, an interface 180, or the like, can be provided to the terminal body, and more particularly, to the front case 101.

The display 151 is shown occupying the majority of a main face of the front case 101. The audio output unit 151 and the camera 121 may be provided at an area adjacent to one of both end portions of the display 151, while the user input unit 131 and the microphone 122 may be provided at another area adjacent to the other end portion of the display 151. The user input unit 132 and the interface 170 can be provided on lateral sides of the front and rear cases 101 and 102.

The input unit 130 may be manipulated to receive a command for controlling an operation of the terminal 100. The input unit 130 may also include a plurality of manipulating units 131 and 132. The manipulating units 131 and 132 will sometimes be referred to herein as a manipulating portion or, button, switch, or the like, and they may implement any mechanism of a tactile manner that enables a user to perform a manipulation action by experiencing a tactile feeling.

Content inputted by the first or second manipulating unit 131 or 132 can be diversely set. For instance, such a command as start, end, scroll or the like is inputted to the first manipulating unit 131. A command for volume adjustment of sound outputted from the audio output unit 152, a command for switching to a touch recognizing mode of the display 151, or the like, can be inputted to the second manipulating unit 132.

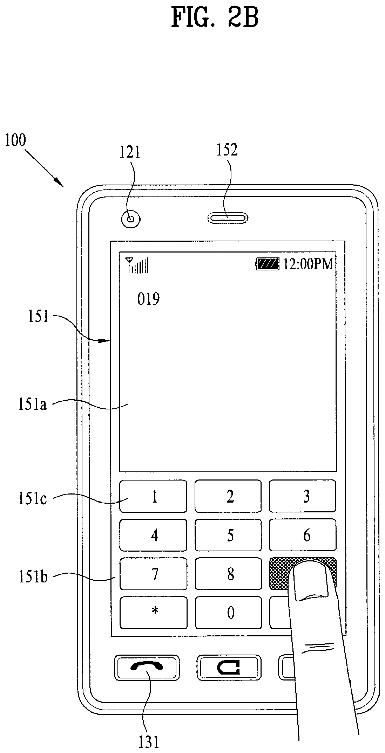

Figure 2B is a front-view of terminal 100 according to various embodiments of the present disclosure. Various kinds of visual information can be displayed on the display 151. Such information can be displayed in characters, numerals, symbols, graphics, icons or the like. In order to input the information, at least one of the characters, numerals, symbols, graphics and icons are represented as a single predetermined array to be implemented in a keypad formation. This keypad formation may also referred to as 'soft keys.'

Figure 2B shows that a touch applied to a soft key is inputted through a front face of a terminal body. The display 151 is operable through an entire area or by being divided into a plurality of regions. In the latter case, a plurality of the regions can be configured interoperable. For instance, an output window 151a and an input window 151b are displayed on the display 151. A soft key 151c representing a digit for inputting a phone number or the like is outputted to the input window 151b. If the soft key 151c is touched, a digit corresponding to the touched soft key is outputted to the output window 151a. If the first manipulating unit 131 is manipulated, a call connection for the phone number displayed on the output window 151a is attempted.

In addition, the display 151 or the touchpad 135 can be configured to receive a touch input by scroll. A user scrolls the display 151 or the touchpad 135 to shift a cursor or pointer located at an entity (e.g., icon or the like) displayed on the display 151. Furthermore, in case that a finger is shifted on the display 151 or the touchpad 135, a path of the shifted finger can be visually displayed on the display 151. This may be useful in editing an image displayed on the display 151.

Consider the scenario in which both the display (touch screen) 151 and the touchpad 135 are touched together within a predetermined or threshold time range, thus causing one function of the terminal can be executed. This simultaneous touch example may correspond to a case that the terminal body is held by a user using a thumb and a first finger (clamping). The above function can include activation or deactivation for the display 151 or the touchpad 135. It should be appreciated that other types of touch inputs may also be used.

Meanwhile, such a graphic for pointing at a specific object on a display or selecting a menu from the display as an arrow, a finger or the like is called a pointer or a cursor. Yet, the pointer is frequently used to mean a finger, a stylus pen or the like for a touch manipulation or the like. In order to clearly discriminate the pointer and the cursor from each other in this disclosure, a graphic displayed on a display is named a cursor and such a physical means for performing a touch, a proximity touch, a gesture or the like as a finger, a stylus pen or the like is named a pointer.

Generally, an application may conceptually be viewed as separately installed/activated software. Yet, an application mentioned in the description of the present disclosure may have the concept of indicating all targets, each of which information is visually displayed on a prescribed region, in activating a specific function. The controller 180 of the mobile terminal according to the present disclosure may be able to control at least two applications simultaneously. And, active applications may be displayed at least one of the display 151, another image display means provided to the mobile terminal and another display provided to another external device connected to the mobile terminal.

For instance, the active applications may be simultaneously displayed by screen partitioning on the display 151, another image display means provided to the mobile terminal and another display provided to another external device connected to the mobile terminal. For another instance, one of the active applications may be displayed as a full screen on the display 151, another image display means may be provided on the mobile terminal and/or another display may be provided on another external device connected to the mobile terminal. For another instance, an execution screen of the active applications may be displayed on the display 151, another image display means may be provided to the mobile terminal and/or another display provided to another external device connected to the mobile terminal in a manner that an execution screen of one active application is overlaid on at least one portion of a region related to another application.

In the present disclosure, it is assumed that the controller 180 of the mobile terminal 100 according to the present disclosure is capable of performing a multitasking function of activating and controlling the aforementioned at least two applications. Moreover, even if one application activated screen is displayed on a display, an execution screen of each application becoming a target of sharing via an external device may be updated by real time and that the updated execution screen is then delivered to the external device. Moreover, the execution screen may be referred to as an application window or an application screen.

Performance enhancements of mobile terminal processors, e.g., the controller 180, may enable highly-sophisticated computations and operations. And, the performance enhancements of the wireless communication unit 110 may enable high-speed data communications via various wireless interfaces. Hence, data sharing between one mobile terminal and another mobile terminal or another digital device having a display device, and more particularly, sharing of displayed image(s)/content may be enabled. Of course, the data sharing between devices can be performed by wired or wireless connections.

International standardizations in technology enable compatibility in content exchange between digital devices. One of the standardization is DLNA (digital living network alliance). The DLNA standard proposes various conditions and methods for data exchange between various digital devices. Connecting methods, specifications or the like in the embodiments of the present disclosure may be supplemented with the DLNA standard, although other standards may be applicable to the present disclosure. And, the present disclosure may be implemented via communication interfaces such as Wi-FI, Bluetooth, IEEE 1394, USB (universal serial bus), IrDA (infrared communication), UPnP (universal plug & play), or the like. Content may be delivered to a renderer from a server by a method of forwarding and playing an intact source of a content, a method of transmitting a screenshot of a still cut by sampling a content displayed image (or an execution screen) by specific periods, or a method of streaming a real-time video of prescribe frame(s). Moreover, a sharing application for content sharing may be installed at a server and/or a renderer, and data exchange can be performed in a manner defined in the sharing application.

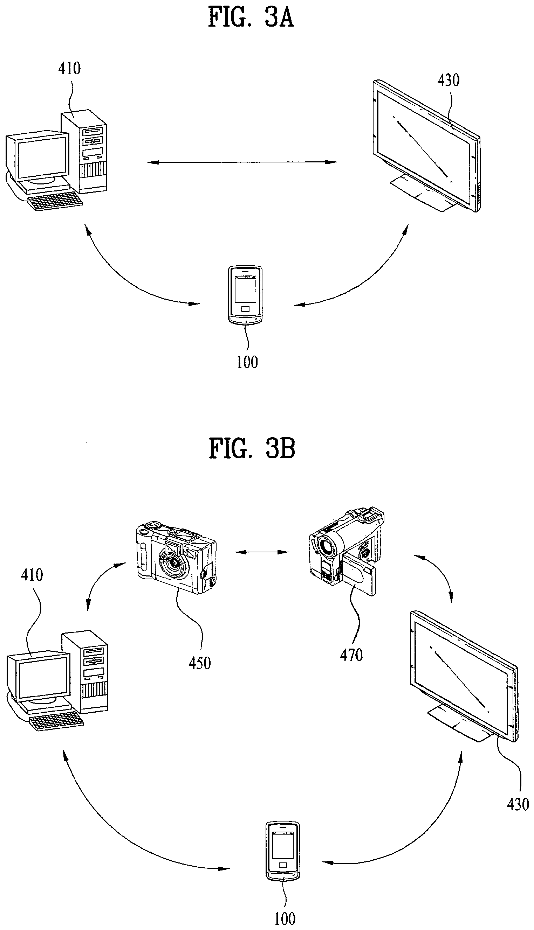

Figures 3A and 3B are diagrams that illustrate configurations of connections among digital devices applicable to embodiments of the present disclosure. Referring to Figure 3A, a mobile terminal 100 may be connected with a computer 410 and a television 430 by wired and/or wireless connections and may be able to perform content/data exchange between the connected devices. In doing so, content may be shared in a manner that one device plays a role of a content server configured to supply content to the rest of the devices and the other connected device(s) may play a role of a renderer in receiving and displaying the corresponding content.

Alternatively, one device may play a role of a controller in controlling another device playing a role of a content server, and the remaining device(s) may perform a content display function only. For instance, the computer 410 may be a content server and the mobile terminal 100 may control the computer 410 so that a specific content stored on the computer 410 may be displayed on the television 430. Alternatively, the connection between devices may be configured in a manner that a content server is also equipped with a control function or that a renderer device in charge of displaying contents also performs a control function.

A method for content sharing as broadly disclosed and embodied herein may include a method for a server device to transmit video information (e.g., frame buffer) recognizable by a display means to a renderer device and a method of activating an application of a format negotiated between devices and then exchanging control data for changing video/audio information outputted from a renderer device. In case that an operating system or platform used for sharing is compatible between devices, the following method may be available. First, an application installation file (e.g., APK file for Android) may be transmitted from one device to another. Secondly, if the installation of the corresponding application is completed in each of the devices, a server device or a controller device may transmit control data to a render device only.

Moreover, in case of a playback of a multimedia content having a prescribed compression scheme, a codec for decoding the compressed content may be provided to a renderer device prior to the playback. Of course, a multimedia file may be transmitted to a renderer device and the corresponding multimedia file may be played through a playback application retained by the renderer device.

The above-described inter-device connections may be configured in a manner that a digital camera 450 and a digital camcorder 470 are further included, as shown in Figure 3B.

When a mobile terminal is connected with at least one external device having a display device, application windows (e.g., execution screen, execution window) of a plurality of applications executing in the mobile terminal may be concurrently displayed on the external device. The mobile terminal may perform a controller and content server functions and the external device may perform a renderer function. Moreover, the mobile terminal may perform all operations or computations to generate an image and an operation of delivering the image resulting from the operations or computations to the external device may be included in the controller and content server function.

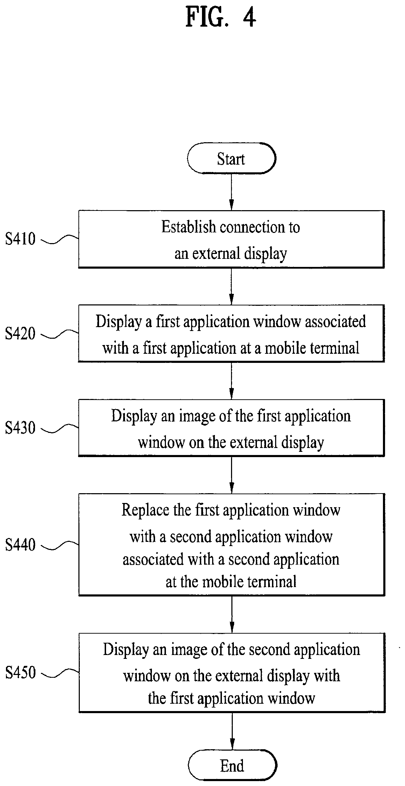

Figure 4 is a flowchart of a process for displaying application windows of a plurality of applications via an external device according to one embodiment of the present disclosure. In step S410, a connection may be established between the mobile terminal 100 to an external device having a display, for example, a TV 430. In step S420, a first application window associated with a first application may be displayed on a display on the mobile terminal 100. The application window may be an execution screen for the application and may be displayed in full screen on the display of the mobile terminal 100.

In step S430, an image of the first application window may be displayed on the external display. The image may be the same or similar to the first application window displayed on the mobile terminal 100. For example, the image may be a scaled image of the first application window as displayed on the mobile terminal 100. The image may also be a scaled image of the display screen, for example, including the status bars or any other image displayed on the mobile terminal 100 as well as the application screen. The image may also include an image of the body of the mobile terminal 100 including the display, buttons, etc.

In step S440, a second application window associated with a second application may be displayed on the mobile terminal 100. The second application window may replace the first application window on the mobile terminal 100. For example, when multiple applications are concurrently operating on the mobile terminal 100, only one application window may be displayed at a time (e.g., when displayed in full screen). In this case, the second application window may be displayed to replace the first application window. The second application window may be displayed when the second application is opened (launched) or when the second application is activated from the background.

In step S450, an image of the second application window may be displayed on the external display with the first application window. For example, while only one application window among a plurality of active applications may be displayed on the mobile terminal, multiple application windows may be displayed concurrently on the external display. The arrangement of application windows displayed on the external display may have various configurations. For example, the images of the application windows on the external display may be tiled, overlapped, etc..

In one embodiment, a prescribed region on the external display may be designated for displaying an image of an application window that is active on the mobile terminal 100 (e.g., center region). When the active application is changed on the mobile terminal 100, the image displayed in the prescribed region of the external display may be changed accordingly. For example, the image of the first application window may be moved to another region of the external display and the image of the second application window may be displayed at the prescribed region.

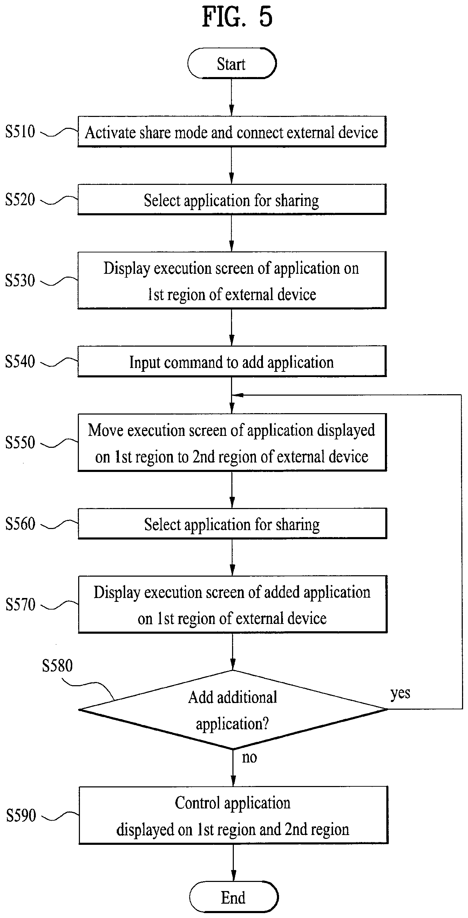

Figure 5 is a flowchart of a process for displaying execution screens (e.g., application windows) of a plurality of applications via an external device according to one embodiment of the present disclosure. The controller 180 may activate a share mode for displaying a content of the mobile terminal on an external device in accordance with an instruction (e.g., a user command input) or an occurrence of an event, and may then establish a data path for image sharing with a connectible external device, in step S510. In this case, the instruction may be a user command input to select a menu or icon via the user input unit 130, a touch input of a prescribed pattern, a manipulation of a specific key button, or the like.

Moreover, the event occurrence may include one of a detection of a connectible external device, receipt of a connection request from the connectible external device, a detection of a connection according to a prescribed protocol by the interface unit 170 (e.g., a detection of a plug insertion of a wired communication cable, etc.) or the like. For example, when a prescribed event is detected, the controller 180 may generate an instruction to activate the share mode for displaying content on the external device.

A procedure for establishing the data path for the image sharing with the external device may include the following steps. The controller 180 may search for a connectible external device via the wireless communication unit 110 and/or the interface unit 170. The controller 180 may control the search result to be displayed on the display 151. If a select command is input (e.g., via the user input unit 130), the external device corresponding to the select command may be connected. Optionally, the controller 180 may be able to automatically select a connectible device according to a preset preference without a user select command.

After the share mode has been activated, an application to be shared may be selected or activated in accordance with a command input or a default setup, in step S520. Here, the application may be selected to be opened or launched, or the application may be selected for sharing among a plurality of background applications executing on the mobile terminal. Once selected, an execution screen for the active application may be displayed on the display of the mobile terminal.

An execution screen of the selected application may be displayed in a first region of a display on the external device, in step S530. In this case, the first region of the display on the external device may be a predetermined or designated region on the external display. Moreover, the first region of the external display may be configured to occupy a center region of the external display.

Thereafter, a command to add an application for image sharing may be input, in step S540. The command to add an application may instruct the controller 180 to share the display of the execution screen of an additional application on the external device. The command may be an input at the user input unit 130 or an input signal generated in response to an event. For example, the command may be generated when an application is opened and an execution screen is displayed on the mobile terminal. In one example, the controller may automatically launch a phone application in response to an incoming call. The controller may also generate a command to add the phone application for image sharing for displaying the phone application on the external display.

In response to the command, a graphical user interface (GUI) may be displayed on the display of the mobile terminal for selecting an application to be added to the external display. The GUI may provide a procedure or instructions for selecting the application for sharing. The GUI may be a home screen, a menu, or another appropriate user interface for accessing applications.

The execution screen of the previously active application on the first region may be moved to a second region, in step S550. In this case, the second region may include a region of the display on the external device which is positioned separate from the first region. For example, the first region may be positioned at a center of the external display and the second region may occupy a region outside the first region, e.g., the sidebars of the external display. It should be appreciated, however, that the first and one or more of the second regions may be positioned in various configurations. For example, the second region may be a neighboring region (e.g., adjacent) to the first region or the first region may overlap the second region. The GUI for selecting the application, which is displayed on the mobile terminal, may also be displayed on the first region of the external device.

An application to be added to the external display may be selected (or activated), in step S560. The selected application may be launched or may activated among a plurality of applications executing on the mobile terminal 100. Once selected, an execution screen of the selected application may be displayed on the display screen of the mobile terminal. In step S570, an execution screen for the active application may be displayed in the first region of the external device.

After the additional execution screen has been shared on the external display, another command for adding an application for image sharing may be inputted, in step S580. In this case, the execution screen of the application displayed on the first region may be moved to the second region. Hence, on the second region, the execution screen of the initially activated application and the execution screen of the additionally activated application may be displayed together. In particular, each time an application adding command is inputted, the steps S550 to S570 may be repeatedly executed. Hence, the execution screen of the application active on the mobile terminal may be displayed on the first region and the execution screens of inactive applications may be cumulatively displayed on the second region. Here, inactive applications may be application which are executing but are not displayed on the mobile terminal.

Once the process to add applications for image sharing has completed, the applications displayed on the external display may be controlled, for example, to execute the application functions, control the operational state of the applications, modify the display configuration of the execution screens, or another appropriate function. For example, the displayed execution screens on the external device may be scrolled to select an active application, or the position, size, orientation, etc. of the execution screens may be customized.

Moreover, when an application is not open on the mobile terminal or has not been selected for image sharing with the external display, a predetermined image may be displayed in the first region of the external display. This image may be a mirror image of the display screen of the mobile terminal or another appropriate type of image. For instance, a home screen initially provided by an operating system of the mobile terminal according to a connection with an external device may be displayed, or a main menu of the mobile terminal containing icons corresponding to applications may be displayed on the external device. If one of the applications is selected, any image displayed on the mobile terminal may be displayed on the first region of the external display as well (e.g., a graphical interface for launching the corresponding application). Moreover, after the application displayed on the first region is moved to a second region in accordance with an application adding command, the graphical interface for selecting the additional application may be displayed in the first region again (e.g., a home screen or a main menu).

The application adding command may be inputted using the sensing unit 140 instead of the key button input. For instance, the external display may be updated based on a sensed movement of the mobile terminal. That is, when a prescribed movement of the mobile terminal detected, an execution screen of an application displayed on the mobile terminal may be shared on the first or second regions of the external display. In another example, the controller may automatically launch a phone application in response to an incoming call. The controller may also generate a command to add the phone application for image sharing in order to display the execution screen for the phone application on the external display.

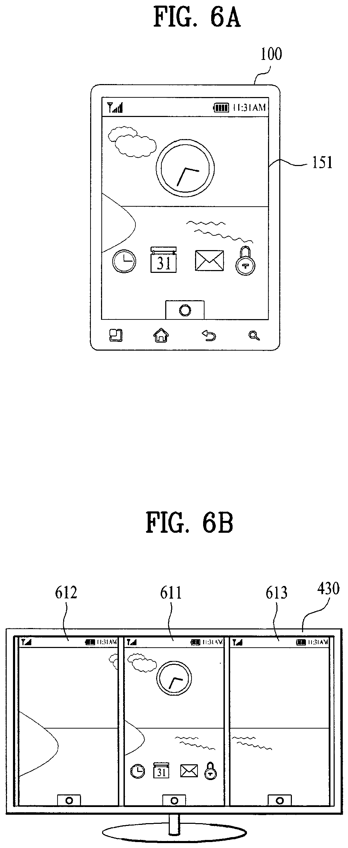

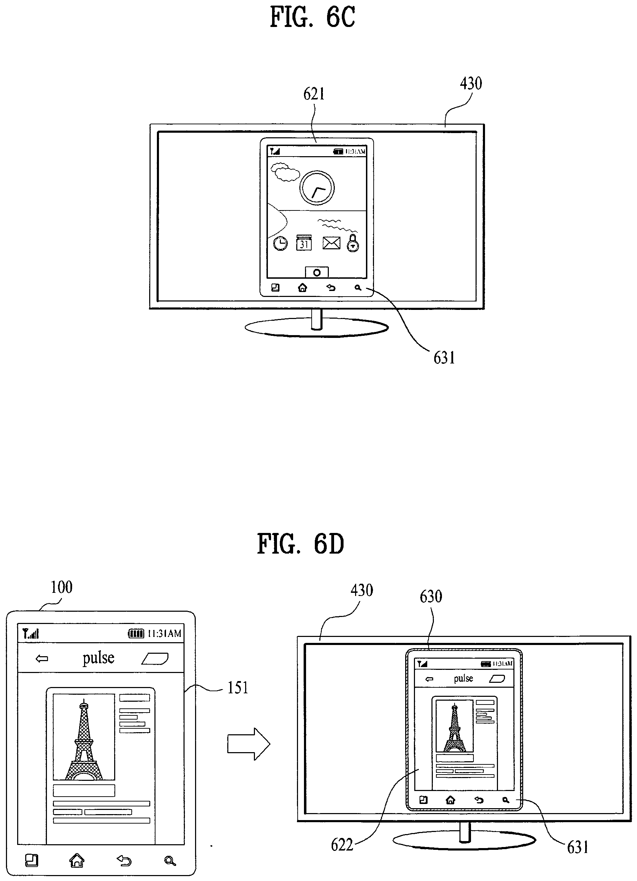

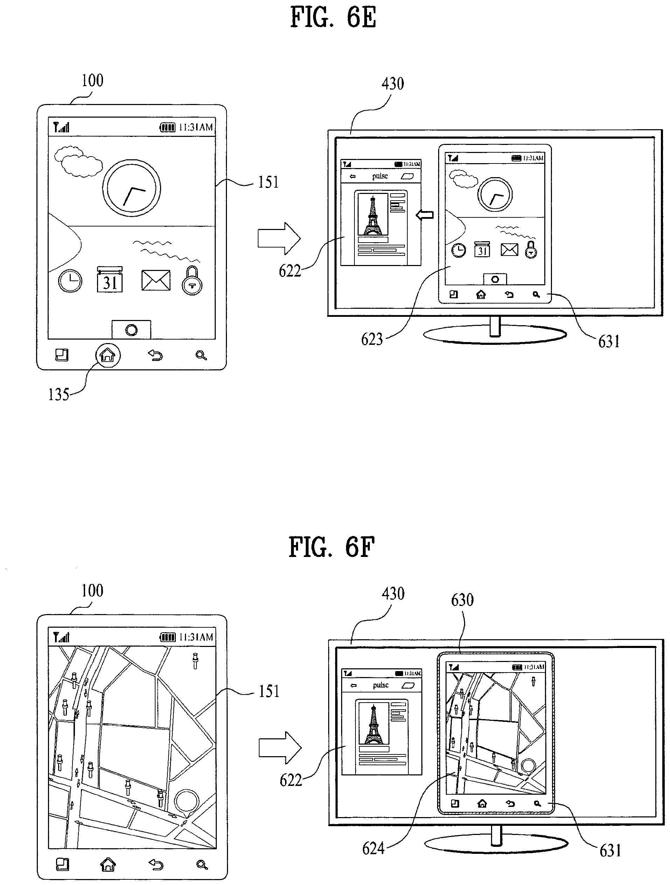

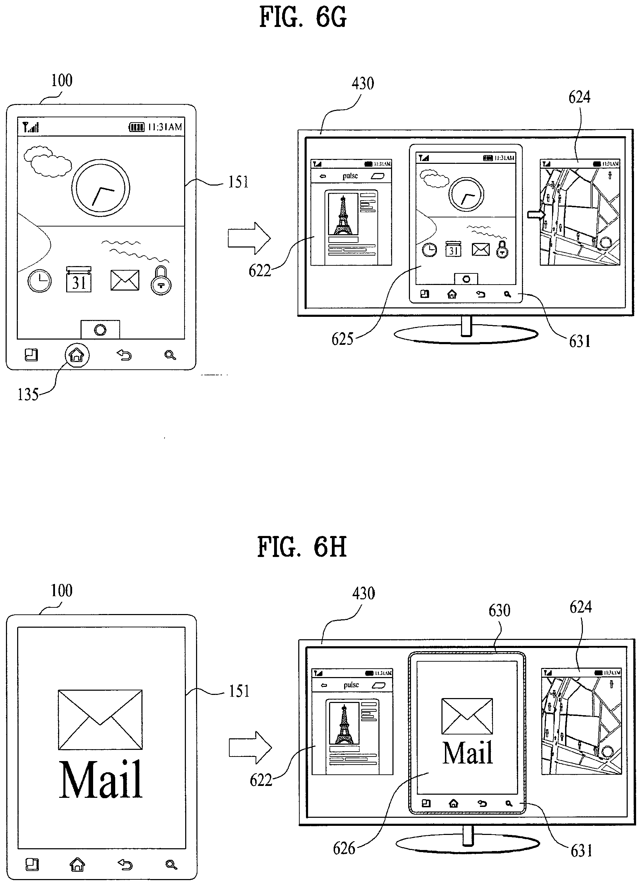

Figures 6A to 6H are diagrams that illustrate a process for sharing active images of a plurality of applications in a mobile terminal with an external device according to one embodiment of the present disclosure. Simply for ease of description, the external device in Figure 6 is shown as a smart TV, but it should be appreciated that the external device may be another appropriate type of device having a display.

Referring to Figures 6A to 6C, after a share mode has been activated in the mobile terminal 100, if a data path to the TV 430 is established, a home screen may be displayed as an initial screen on the display 151 of the mobile terminal 100, as illustrated in Figure 6A. The home screen on the mobile terminal 100 may be shared with the TV 430 and displayed as a home screen image 611. The home screen image 611 may be displayed in a center region of the TV 430 connected with the mobile terminal 100, as illustrated in Figure 6B.

The display 151 of the mobile terminal 100 and the display of the TV 430 may have different aspect ratios. Hence, when the home screen image 611 is displayed in the center region of the TV 430, a sidebar or unused display space may exist adjacent to the home screen image. This unused display space may be used to display other images. For example, additional images 612 and 613 may be displayed on both sides of the home screen image 611 despite not being currently displayed on the display 151 of the mobile terminal 100. The display of the TV 430 may be partitioned to display the additional images 612 and 613. Moreover, the graphics of the additional images 612 and 613 may aesthetically correspond to the image of the home page to effectively extend the home page and may include icons for other applications not displayed on the home screen image 611.

As illustrated in Figure 6C, the home screen on the mobile terminal 151 may be replicated on the TV 430 to show an image of the body (or frame) of the mobile terminal 100. The body of the mobile terminal 100 may be displayed on the center region of the TV 430 and a home screen image 621 corresponding to the active home screen on the display 151 may be displayed within the image of the body.

Referring to Figure 6D, when an application is selected and activated in the mobile terminal 100 for sharing on the external display 430 in accordance with a command input (e.g., user input), an image of an execution screen 622 of the selected application may be displayed in the center region of the connected TV 430.

Moreover, a prescribed visual effect 630 may be displayed around the execution screen 622 and may be provided around the periphery of the body of the mobile terminal shape displayed on the center of the TV 430. The visual effect 630 may be provided to indicate that the highlighted application is the active application on the mobile terminal 100 and controllable via the mobile terminal 100. The visual effect 630 may be represented as a prescribed color given to the mobile terminal frame periphery, for example. Any visual effect or indicia capable of visually discriminating the corresponding execution screen from neighboring execution screen(s) may be substituted for the visual effect 630.

As illustrated in Figure 6E, when a prescribed command to add an application for image sharing is input, for example, through a manipulation of the user input unit 130, the home screen may be displayed as an initial screen on the display 151 of the mobile terminal for selecting an application for sharing an execution screen on the TV 430. The prescribed command may be generated in response to various types of inputs or events. For example, the prescribed command may be input using one of the buttons provided on the mobile terminal body. In one example, a key button 135 may be a home-key and may be selected to generate the command. The command may be generated in response to manipulation of the key button 135 in a prescribed manner, such as a predetermined pattern, duration, or pressure of depression of the selection. As another example, the command may be generated by shaking the mobile terminal in a specific pattern to enable the sensing unit 140 to sense the corresponding motion.

When the key button 135 is selected to add an application for image sharing, the execution screen 622 of the previously displayed application may be moved from the center (e.g., the first region) and displayed at left edge of the TV 430 (e.g., the second region), and a home screen image 623 which is currently displayed on the mobile terminal 100 may be displayed at the center of TV 430. The home screen image 623 may be displayed inside the image 631 of the body of the mobile terminal 100. In doing so, the image 631 of the mobile terminal body is no longer displayed around the execution screen 622 that was moved to the second region.

Moreover, the execution screen 622 displayed in the left edge of TV 430 may continue to be updated in real time despite not being currently displayed on the mobile terminal 100. In particular, a plurality of applications may run in the background on the mobile terminal, although not displayed (e.g., inactive) on the mobile terminal. The controller 180 may continuously update the execution screens for these applications on TV 430 although they are not displayed on the mobile terminal 100.

At the home screen on the mobile terminal 100, as illustrated in Figure 6E, an application (e.g., map application) may be selected for sharing its execution screen on the TV 430. The selected application may be displayed on the mobile terminal 100, as illustrated in Figure 6F. An execution screen 624 that corresponds to the active application on the mobile terminal 100 may be displayed on the center of the connected TV 430 (Figure 6F). An image 631 of the body of the mobile terminal may be displayed around the execution screen 624. Moreover, a prescribed visual effect 630 may be provided around the periphery of the image 631 to indicate that the execution screen 624 corresponds to the active application.

Figures 6G and 6H illustrate a process for adding an additional application for image sharing on the TV 430 from the state as illustrated in Figure 6F. At the mobile terminal 100 of Figure 6F, if a command to add another application is input (e.g., by a prescribed selection of key button 135), the home screen may be displayed as an initial screen for selecting the application. As illustrated in Figure 6G, the home screen may be displayed on the display 151 of the mobile terminal 100. As the application adding command is similar to the application adding command as previously described with reference to Figures 6D and 6E, detailed description thereof is omitted herein.

In response to the command to add another application and the home screen displayed on display 151, execution screen 625 of the home screen may be displayed at the center (e.g., the first region) of the TV 430. The execution screen 625 may be displayed inside the image 631 of the body of the mobile terminal 100. The previously displayed execution screen 624 may be moved to the right edge (e.g., the second region). The image 631 of the body of the mobile terminal 100 may be omitted when the execution screens are displayed in the right edge.

At the mobile terminal 100 of Figure 6G, if a third application (e.g., mail application) is selected for sharing to display the execution screen on the TV 430, an execution screen for the third application is displayed on the mobile terminal 100, as illustrated in Figure 6H. The third application may be selected through the user inputs as previously described. A corresponding execution screen 626 may be displayed in the center of the display on the TV 430 to replace the home screen 625. Moreover, as previously described, the image 631 of the body of the mobile terminal 100 may be displayed as well as the visual effect 630 around the periphery of the body as an indicia for the active application.

The application corresponding to the execution screen 626 displayed at the center may be directly manipulated by the user via the mobile terminal 100. Although the execution screens 622 and 624 displayed on side regions of the TV 430 are not displayed on the display of the mobile terminal 100, they may be updated in real time by the mobile terminal 100 on the TV 430. In case that the user attempts to control the application corresponding to the execution screen located in the second region, the execution screen corresponding to the application to be controlled may be moved to the first region (e.g., the center).

In one embodiment, an execution screen accessed while displayed in the second region may continue to be displayed in the second region. In this embodiment, the accessed execution screen may be highlighted using the image 631 of the body of the mobile terminal 100 and the visual effect 630 to indicate that the application is displayed on the mobile terminal 100. The size of the execution screens on the TV 430 may be adjusted as well to increase the size of the active execution screen.

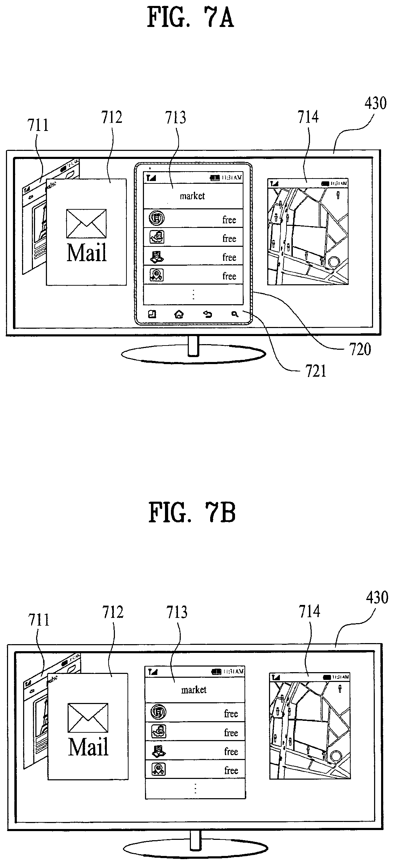

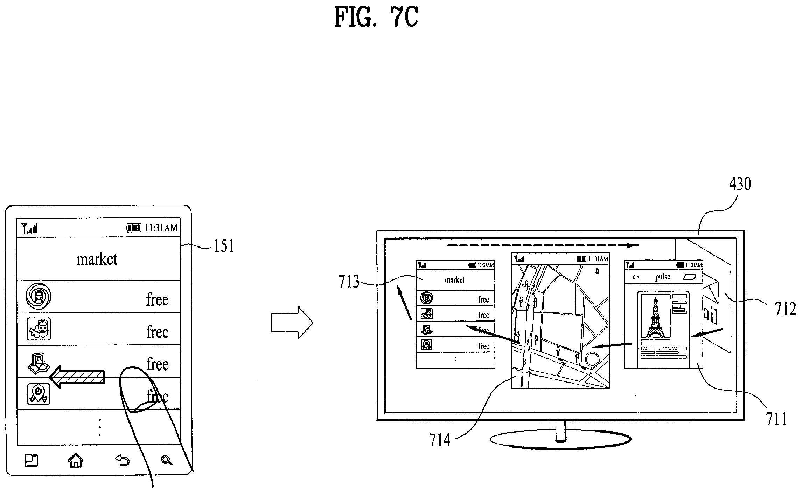

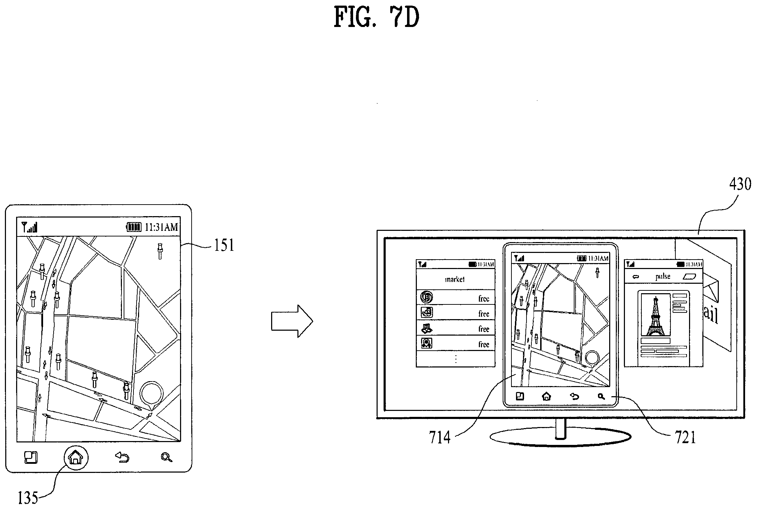

As previously described with reference to Figures 6E and 6F, the first execution screen 622 may be moved to the left edge of the TV 430 to add the second execution screen 624, and the second execution screen 624 may be moved to the right edge of the TV 430 to add the third execution screen 626. However, the present disclosure is not limited thereto. In one embodiment, each application which is moved out of the center region may be moved in the same direction. For example, when the home screen 625 is displayed in the center of TV 430 (Figure 6G), the second execution screen 624 may be moved to the left edge of the TV 430 and the first execution screen 622 may be moved from the left edge to the right edge. In this way, the order of the execution screens displayed on the TV 430 may correspond to the chronological order in which the application are added. This may be desirable when scrolling the execution screens on the TV 430 using the mobile terminal 100, as described in further detail with respect to Figure 7. Moreover, in one embodiment, the positions of new and existing execution screens displayed on the TV 430 may be determined by the user or controller 180, and may be based on the format of the display (e.g., in line or side-by-side, tiled, overlapped, etc.).

Figures 7A to 7D are diagrams that illustrate a process for controlling a display of execution screens for applications in a mobile terminal which are shared with an external device. Execution screens 711 to 714 corresponding to four applications on the mobile terminal 100 may be shared to be displayed on the TV 430. The execution screen 713 positioned at the center of the display screen may correspond to an active application which is currently displayed on the mobile terminal 100. Here, only the active execution screen 713 may be displayed within an image 721 of a body of a mobile terminal 100.

The displayed positions of the execution screens 711 to 714 may be changed to change the active application among the displayed execution screens 711 to 714. The execution screens may be moved by inputting a region switching command using a prescribed input using a predetermined button and/or an input pattern (e.g., a home-key button long touch, a search key button long touch, a shaking of a specific pattern, etc.) via the user input unit 130. Once the region switching command has been input, the controller 180 may remove the image 720 of the body from execution screen 713 to indicate that the execution screens may be moved, as illustrated in Figure 7B.

Subsequently, the execution screen 711 to 714 may be moved using an input at the mobile terminal 100. For example, the execution screens 711 to 714 may be scrolled using a drag or flick touch input on the display 151 of the mobile terminal 100. As the active execution screen is changed on the mobile terminal 100, the corresponding execution screens 711 to 714 may be scrolled on the TV 430, as illustrated in Figures 7C and 7D.

The execution screen 713 of Figure 7B corresponds to the active application displayed in the mobile terminal 100 of Figure 7C. In order to change the active application on the mobile terminal 100, a touch input may be entered at the display 151. For example, when a flick touch is inputted to the left, the displayed application on the mobile terminal 100 is changed from the "market" application to the "map" application (Figures 7C and 7D). Moreover, on the TV 430, the execution screen 714 (map) that was displayed on the right side of the TV 430 (Figure 7B) is moved left to the center or the first region (Figure 7C).

Thereafter, a prescribed input at the mobile terminal 100 may allow the process to exit the mode for moving the displayed execution screens. For example, the home button 135 may be pressed to exit the scroll mode. Thereafter, touch inputs (e.g., flick) at the display 151 may no longer scroll the displayed execution screen. Instead, the controller 180 may recognize the corresponding flicking touch input as a command for controlling an application currently displayed on the touchscreen. Moreover, the image 721 of the body of the mobile terminal 100 may be displayed at the execution screen 714 positioned at the center of the TV 430, indicating that the scroll mode is inactive.

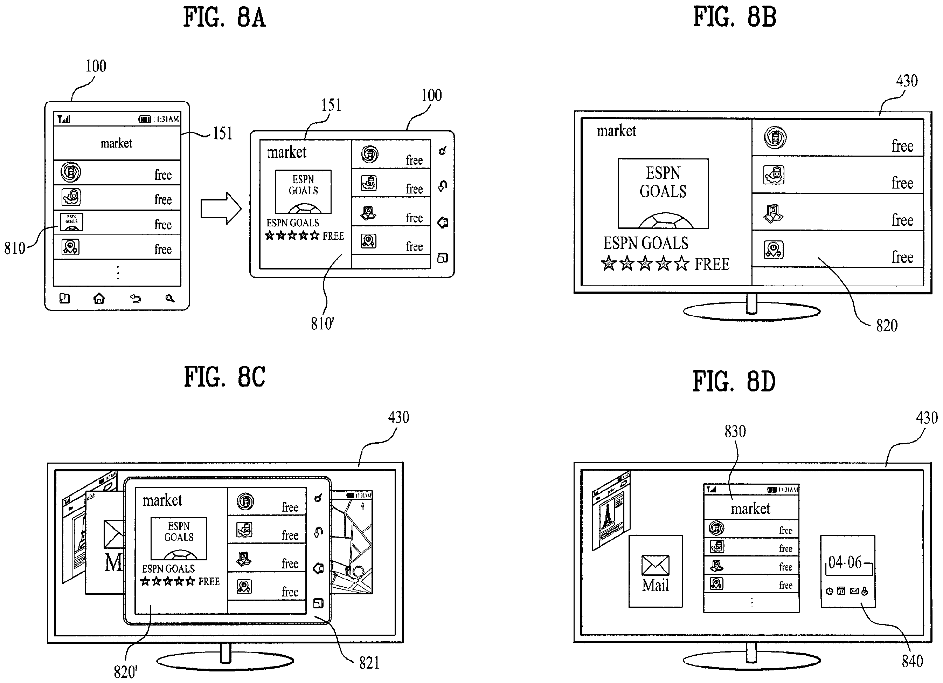

Figures 8A to 8D are diagrams that illustrate a process for controlling a display of execution screens for applications in a mobile terminal which are shared with an external device according to one embodiment of the present disclosure. For purposes of description, it will be assumed that four execution screens, as shown in Figure 7A, are shared with a TV 430. In this case, referring to Figure 8A, when the mobile terminal 100 in a portrait mode is rotated 90 degrees counterclockwise, the mobile terminal 100 may be placed in a landscape mode. The user interface 810 of the application displayed in portrait mode may be changed to be displayed in landscape mode 810'.

Referring to Figure 8B, the execution screen of the corresponding application in the connected TV 430 may be displayed in landscape mode, and may then be displayed as a full screen image 820. Alternatively, referring to Figure 8C, the execution screen 820' of the corresponding application may be rotated together with the image 821 of a body of the mobile terminal to be displayed in landscape mode.

Instead of rotating the mobile terminal in the landscape direction, referring to Figure 8D, the execution screen displayed on the center of the TV 430 may be enlarged by a prescribed manipulation via the user input unit 130. If the execution screen is enlarged, the image 821 of the body of the mobile terminal may be removed. And, the execution screen (e.g., the execution screen 840) displayed on a second region may be reduced as much as the enlarged size of the execution screen 830 displayed in the first region (e.g., center of TV 430). Alternatively, the execution screen displayed in the second region (e.g., outside the center area of the TV 430) may be replaced by an icon.

In certain embodiments, a prescribed button (e.g., key button) may be used to control an active image shared by the mobile terminal 100 with the TV 430. The key button as disclosed herein may include a hardware key button (e.g., a push button, a touch button, etc.) provided to an exterior housing of a mobile terminal or a virtual key button displayed on a touchscreen. A key button may be dedicated to a particular function or may be mapped to one of a plurality of functions. Moreover, the key button may be a combination of a hardware key button and an selectable object displayed on the touchscreen. For instance, when a menu provided to a task manager (e.g., multitasking management) window configured to appear by a long touch to a home key in Android OS is touched, the specific key button (e.g., M button) may be considered being manipulated. Simply for ease of description, the key button may be referred to herein as an "M button".

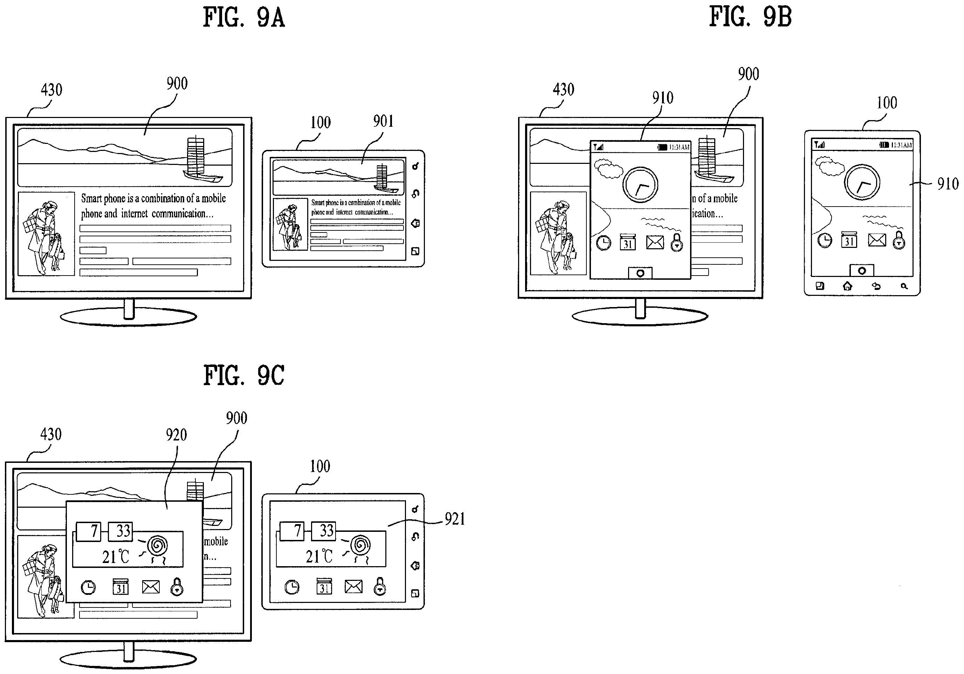

Figures 9A to 9C are diagrams that illustrate a method of sharing an active image according to one embodiment of the present disclosure. Referring to Figure 9A, after a share mode has been activated, an execution screen 900 of an application that is displayed in a mobile terminal 100 may be displayed in full screen on a connected TV 430. Subsequently, when an M button (e.g., key button) is selected, an interface may be displayed on the mobile terminal 100 for selecting an additional application for sharing on the TV 430. The interface may be a home screen, a main menu, or another appropriate type of interface for selecting an application on the mobile terminal.

Moreover, when the interface (e.g., home screen) is displayed on the mobile terminal 100, an image of the touchscreen may be displayed on the TV 430. For example, an execution screen 910, 920 may be displayed over a previously shared execution screen 900 as an overlay window, as illustrated in Figures 9B and 9C. The execution screen 910, 920 may be the interface as displayed on the mobile terminal or another application being shared by the mobile terminal 100. Moreover, a shape of the overlay window may be configured based on the orientation of the mobile terminal 100 (e.g., portrait or landscape).

For instance, when the mobile terminal 100 is positioned vertically, as illustrated in Figure 9B, the overlay window 910 may be displayed in a portrait mode, and when the mobile terminal is positioned horizontally, as illustrated in Figure 9C, the overlay window 920 in landscape mode may be displayed. Moreover, while the application associated with execution screen 900 may no longer be displayed on the mobile terminal 100, the controller 180 may continue to execute the corresponding application. As a result, the execution screen 900 may be updated in real time on the TV 430, even while the overlay window 910, 920 is displayed. When the overlay window 910, 920 is closed, the execution screen 900 may return to being displayed in full screen.

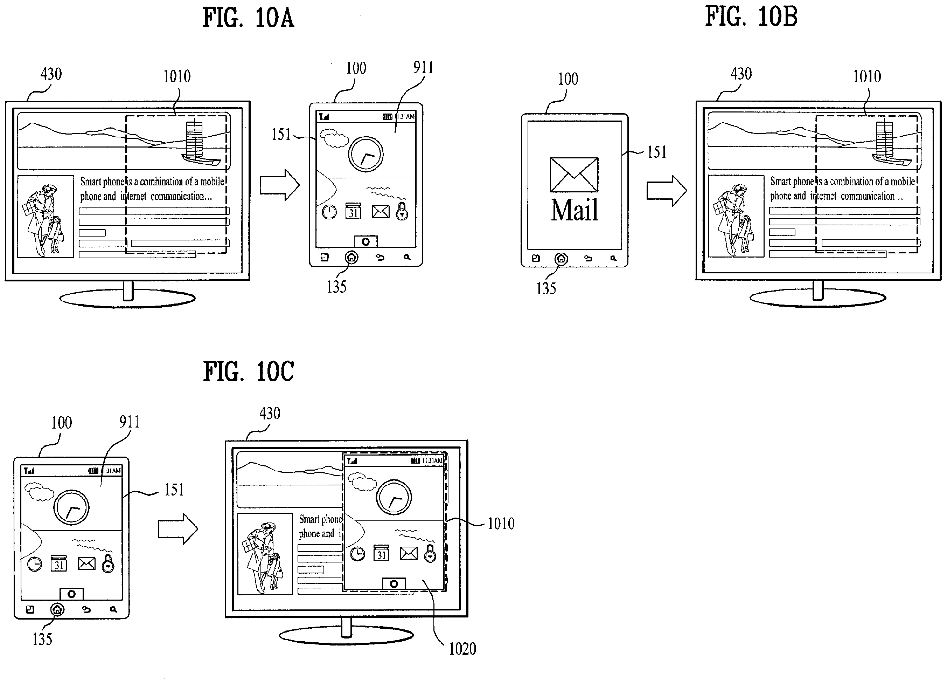

Figures 10A to 10C are diagrams for one example of a method of controlling an overlay window in a mobile terminal according to another embodiment of the present disclosure. In this embodiment, the display of the overlay window on the external device may be toggled using a key button.

Referring to Figure 10A, an execution screen 900 is displayed in full screen on TV 430 and an overlay window 910 may be displayed in a region 1010 on the TV 430, as previously described with respect to Figure 9B. When the M button is selected (e.g., clicked, double clicked, etc.), the overlay window 910 may be removed from the region 1010, as illustrated in Figure 10A. Yet, in doing so, the image 911 displayed on the touchscreen of the mobile terminal 100 may remain intact. That is, the screen image of the mobile terminal 100 is no longer shared with the TV 430. A different application may be activated on the mobile terminal 100 but not shared on the TV 430, as illustrated in Figure 10B.

The home screen may be displayed again on the mobile terminal 100. Subsequently, if the M button is manipulated again, an overlay window 910 is may be displayed again on the region 1010, as illustrated in Figure 10C.

By the method described with reference to Figure 10A to 10C, a user may be able to determine whether to display an overlay window by a toggle mechanism. This may be especially useful when a user wishes to perform a personal task (e.g., read emails) that she does not wish to share on the external device.

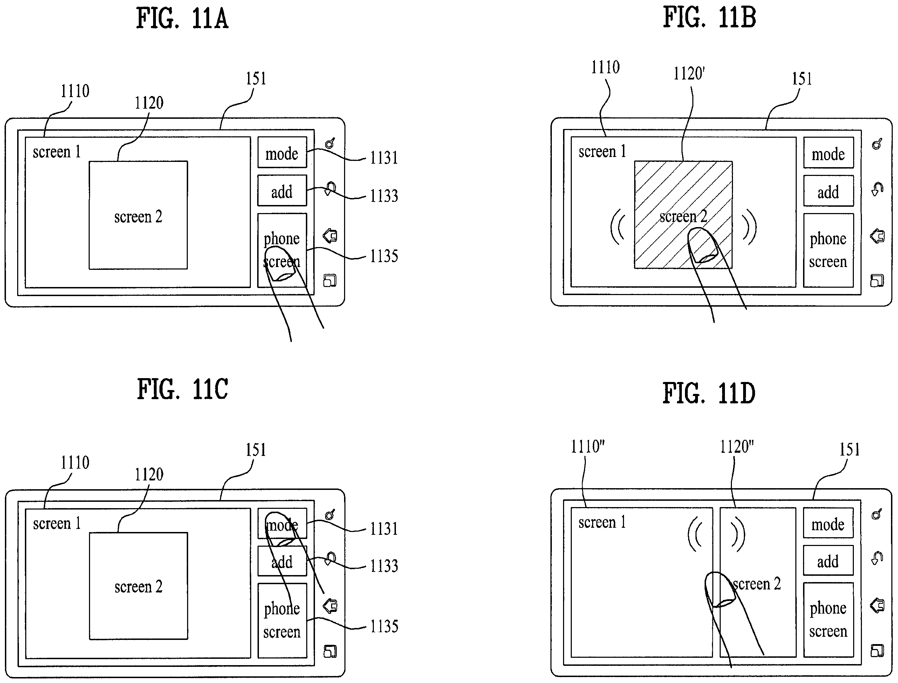

Figures 11A to 11D are diagrams that illustrate a method of changing an arrangement state of an overlay window via a prescribed user interface in a mobile terminal according to one embodiment of the present disclosure. Referring to Figure 11A, in accordance with a prescribed menu manipulation (e.g., a manipulation of an M button over predetermined duration, a long touch, etc.), a layout of an execution screen currently displayed on a TV 430 may be displayed on a left part of a touchscreen 151 and menu buttons may be displayed on a right part of the touchscreen 151. A diagram 1110 that corresponds to a full screen image and a diagram 1120 that corresponds to an overlay window may be displayed on the layout. The menu buttons may include a mode button 1131, an add button 1133, and a control target select button 1135.

In this case, the mode button 1131 may provide a function of changing a window type screen configuration, for example, into a partitioned screen type. The add button 113 may be selected to add one or more additional overlay windows 1120. The control target select button 135 may be used to determine a target to be moved by a touch & drag input. In Figure 11A, the control target select button 1135 is set to a phone screen, i.e., an overlay window.

If a user attempts to change a position of an overlay window, the user touches the control target select button 1135. If so, it may able to give a prescribed visual effect indicating that a diagram 1120' indicating the overlay window is selected. In accordance with a user's touch & drag input, a position of the diagram 1120' representing the overlay window may be changed within the diagram 1110 that represents the full screen.

Meanwhile, if the mode button 1131 is selected (Figure 11C), the layout may be changed from a overlay mode to a screen partition mode (Figure 11D). If a user applies a touch & drag input to a boundary between the two diagrams 1110" and 1120", a size ratio of the two diagrams 1110" and 1120" may be changeable.

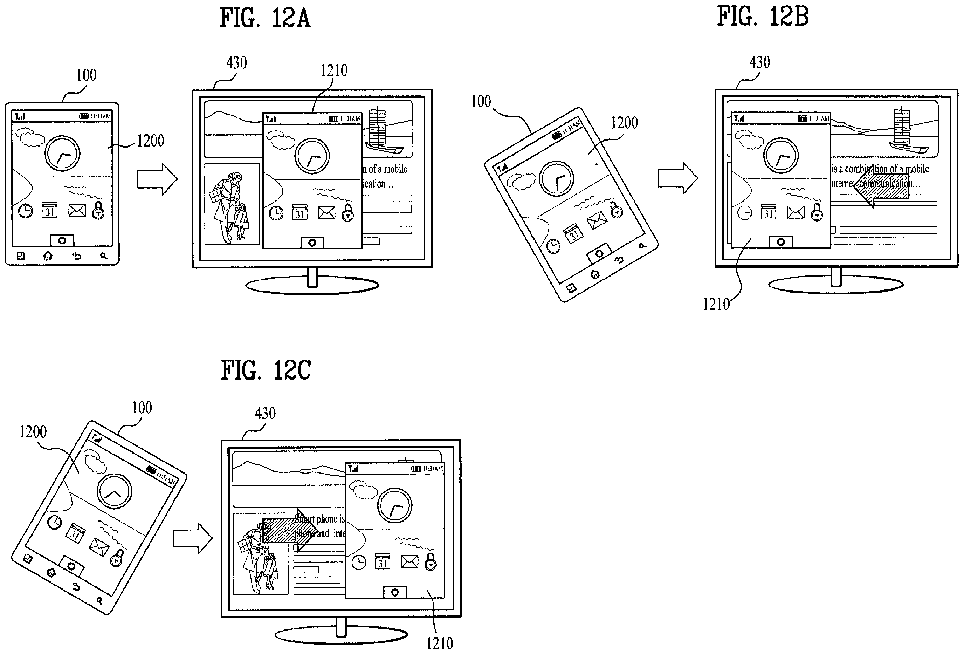

Figures 12A to 12C are diagrams that illustrate a method of changing an overlay window arrangement state in a mobile terminal using a sensing unit according to one embodiment of the present disclosure. When a display screen of a mobile terminal 100 is displayed as an overlay window on a center region of a TV 430, as illustrated in Figure 12A, and the mobile terminal 100 is rotated (or inclined) in a counterclockwise direction, the overlay window 1210 may be moved to the left, as illustrated in Figure 12B. Moreover, when the mobile terminal 100 is rotated in a clockwise direction, the overlay window 1210 may be moved to the right, as illustrated in Figure 12C. Moreover, the overlay window 1210 may be moved based on a prescribed input at the mobile terminal 100. For example, the input to move the overlay window 1210 may be a prescribed movement applied to the mobile terminal 100 (e.g., shaking motion), while selecting an M button.

This method may be applicable to a screen partitioning type of display configurations. For instance, when an external display screen is partitioned to display two execution screens, and the mobile terminal is rotated (inclined) in a prescribed direction while an M button is pressed, the positions of the execution screens may be switched between each other on the external display. For example, an execution screen displayed on the left side may be moved to the right side and an execution screen displayed on the right side may be moved to the left side. Moreover, while an M button is manipulated, if a motion of a specific pattern is applied to the mobile terminal, the layout of the external display may be changed between different types of layouts (e.g., between an overlay type and a partitioned type).

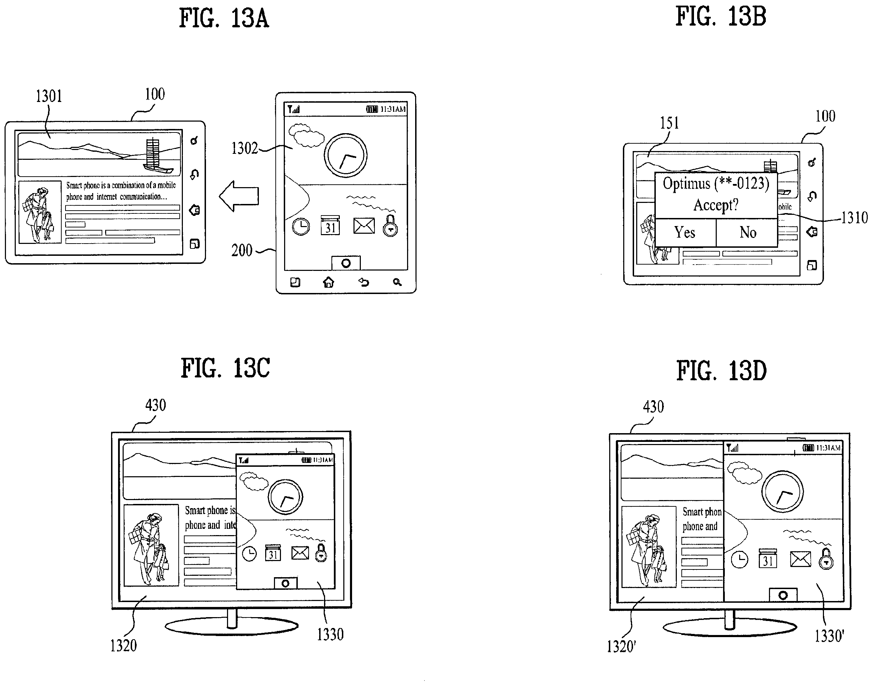

Figures 13A to 13D are diagrams that illustrate a method of sharing an image of a second terminal from a mobile terminal with an external device according to another embodiment of the present disclosure. Referring to Figure 13A, a first mobile terminal 100 may be configured to share an execution screen 1301 for applications with a TV 430. A second mobile terminal 200 may be configured to share information with mobile terminal 100. The execution screen 1301 for an application activated in a mobile terminal 100 may be displayed as a full screen image 1320 on a TV 430.

The second mobile terminal 200 may send request to the first mobile terminal 100 for screen sharing with the mobile terminal 100, as illustrated in Figure 13A. A popup window 1310 for determining whether to accept the request may be displayed on a touchscreen 151 of the mobile terminal 100. If 'yes' is selected from the popup window 1310 (i.e., request accepted), an image provided by the second mobile terminal 200 may be displayed on the touchscreen 151 of the mobile terminal 100. If an M button is selected, for example, the controller 180 may control the TV 430 to display the image transmitted by the second terminal 200 as an overlay window 1330, as illustrated in Figure 13C. Of course, the corresponding image 1330' may be displayed as a screen-partitioned layout, as illustrated in Figure 13D. The image provided by the second mobile terminal 200 may be displayed on both the mobile terminal 100 and the TV 430, or only on the TV 430.

When the image from the second mobile terminal 200 is displayed only on the TV 430, the controller 180 of the first mobile terminal 100 may provide the TV 430 with the image data transmitted by the second terminal 200 by rendering the image data. Here, the execution screen 1301, which was active prior to the request from the second mobile terminal 200, may continue to be displayed on the first mobile terminal 100. Moreover, the execution screen 1320 corresponding to the execution screen 1301 may also continue to be displayed on the TV 430, as illustrated on Figure 13D. In this case, the application associated with execution screen 1320 may be controlled at the first mobile terminal 100, and the application associated with the overlay window 1330 may be controlled at the second mobile terminal 200. For example, the applications for execution screen 1320 and overlay window 1330 may be controlled through user inputs at the respective mobile terminals.

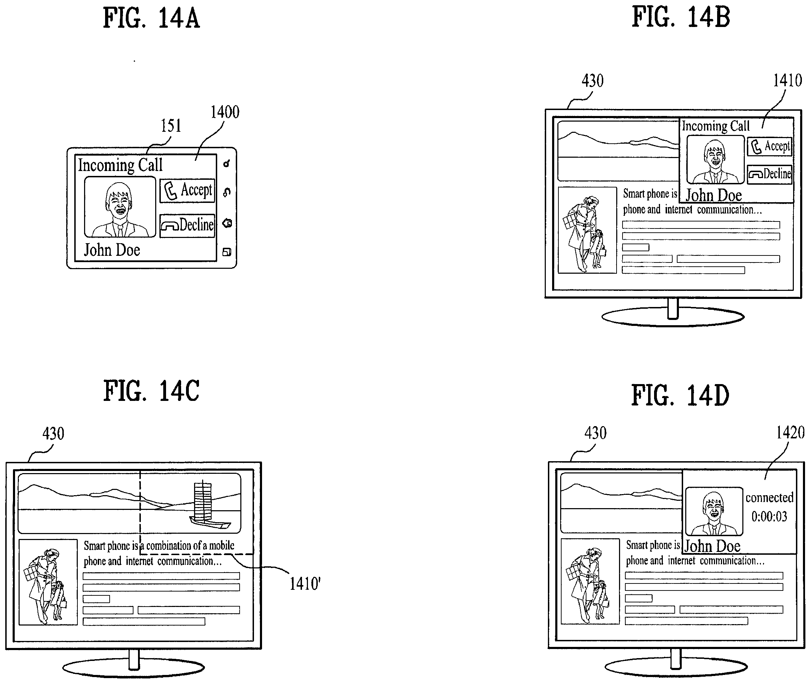

Figures 14A to 14D are diagrams illustrating a method of controlling image sharing between mobile terminal and an external device according to another embodiment of the present disclosure.

A display of certain types of information may be prevented or blocked from the external device while performing a sharing function according to the present disclosure. For instance, while an execution screen of an SMS application is being shared with an external device, if a new text message is received, the controller 180 may control an incoming text message alarm image (e.g., popup window, indication window, etc.) to be displayed on a display of the mobile terminal 100 while not displayed on the external device.

If a prescribed event occurs, an application matched to the corresponding event may be additionally displayed as a new execution screen on an external device. In doing so, a size of the execution screen may be configured in accordance with a type of the event. For example, referring to Figure 14A, if a call signal is received at a mobile terminal 100 in the course of performing a sharing function, an incoming call related screen may be displayed on a touchscreen 151 of the mobile terminal 100. In doing so, referring to Figure 14B, an incoming call related screen 1410 may be displayed as an overlay window on a prescribed region 1410' of a connected TV 430. If the incoming call is rejected, the corresponding overlay window 1410 may disappear from the prescribed region 1410' or the incoming call related screen 1410 may not be displayed at all in accordance with preference settings on the mobile terminal 100, as illustrated in Figure 14C. That is, overlay window 1410 may be prevented from being displayed on the TV 430 even when an execution window 1400 is displayed on the mobile terminal 100.

If the user accepts the call signal, referring to Figure 14D, a connected call screen 1420 may be displayed. The displayed connected call screen 1420 may have a size greater than that of the incoming call related screen 1410. If the call is ended, the connected call screen 1420 may disappear again.

As broadly described and embodied herein, a method of controlling a mobile terminal may include establishing a connection to an external display; executing a first application in the mobile terminal; transmitting information associated with the first application to the external display; displaying a first application window for the first application in a first region of the external display based on the transmitted information; receiving a command to display another application window on the external display; moving the first application window for the first application displayed on the first region to a second region of the external display; executing a second application in the mobile terminal; transmitting information associated with the second application to the external display; and displaying a second application window for the second application in the first region of the external display.

In this embodiment, the method may further include displaying a menu in the first region of the external display for selecting the second application among a list of one or more applications in response to the command. The application window may be displayed in the first region of the external display is simultaneously displayed on a display of the mobile terminal. The method may further include receiving a command to change the display of the application windows on the external display; detecting an input to scroll the displayed application windows at the mobile terminal; and scrolling the displayed application windows on the external display in response to the detected input.

In this embodiment, the method may further include determining an orientation of the mobile terminal based on sensed motion of the mobile terminal; and changing a shape of the application window displayed in the first region to correspond to the determined orientation of the mobile terminal. The changing the shape of the application window displayed in the first region includes changing the application window displayed in the first region to a portrait mode from a landscape mode based on the determined orientation of the mobile terminal; and changing the application window displayed on the first region to the landscape mode from the portrait mode based on the determined orientation of the mobile terminal.

The receiving a command to display another application window on the external display may include at least one of detecting a selection of a button provided to the mobile terminal, or detecting a prescribed pattern of motion based on sensed motion of the mobile terminal. The application window displayed in the second region may be updated in real time irrespective of whether an application associated with the application window displayed in the second region is displayed on the mobile terminal.

In one embodiment, a method of controlling a mobile terminal may include establishing a connection to an external display; displaying a first application window associated with a first application on a display on the mobile terminal; displaying an image of the first application window on the external display; receiving a request to display a second application on the mobile terminal; displaying a second application window associated with the second application on the display on the mobile terminal in response to the request; and displaying an image of the second application window and the image of the first screen on the external display, wherein the second application window associated with the second application replaces the first application window associated the first application on the display of the mobile terminal.

In this embodiment, the image of the first application window may be moved from a first region on the external display to a second region on the external display, and the image of the second application window is displayed in the first region on the external display. The first region may include a full screen image of the first application window and the second region is an overlay window displayed over the first region. The first region and the second region may be configured to not overlap each other on the external display. The request to display the second application on the mobile terminal may be based on a selection of a prescribed button on a body or display of the mobile terminal. Moreover, at least one of a position, size, or orientation of the first and second application window may be changed based on an input at the mobile terminal.

In this embodiment, the method may further include detecting a selection of a prescribed button on a body of the mobile terminal; removing the image of the second application window of the second application from the first region; detecting a second selection of the prescribed button; and displaying the image of the second application window of the second application on the first region. When the image of the second application window of the second application is removed by the selection of the prescribed button, the display of the second application window of the second application may be maintained on a display of the mobile terminal.

In this embodiment, the method may further include detecting a change in an inclination of the mobile terminal; and changing a position of the second region within the first region to correspond to the detected change in inclination. Moreover, the method may further include detecting a change in an inclination of the mobile terminal; and switching positions of the first and second regions between each other based on the detected change in inclination. Here, the changing the position of the first and second regions may include detecting a selection of a prescribed button on the mobile terminal.

In one embodiment, a method of controlling a mobile terminal may include establishing a data connection to a first external device having a display; executing a first application in the mobile terminal; transmitting information associated with the first application to the first external device; displaying a first application window for the first application in a first region of the display; receiving information associated with a second application that executes in a second external device; and displaying a second application window for the second application in a second region of the display based on the information associated with the second application.

In an aspect of the present disclosure, a method of controlling a mobile terminal according to one embodiment of the present disclosure may include the steps of establishing a data path to an external device including a first display, activating an application in the mobile terminal, displaying an execution screen of the application on a first region of the first display, inputting an application adding command via the mobile terminal, moving the execution screen of the application displayed on the first region to a second region of the first display, activating an added application in the mobile terminal, and displaying an execution screen of the added application on the first region.

In another aspect of the present disclosure, a method of controlling a mobile terminal according to another embodiment of the present disclosure may include the steps of establishing a data path to an external device including a first display, activating a first application in the mobile terminal, displaying an execution screen of the first application on a first region of the first display, performing a first manipulation on a specific key button in the mobile terminal, activating a second application in the mobile terminal, and displaying an execution screen of the second application on a second region of the first display.

In a further aspect of the present disclosure, a method of controlling a mobile terminal according to a further embodiment of the present disclosure may include the steps of establishing a data path to a first external device including a first display, activating a first application in the mobile terminal, displaying an execution screen of the first application on a first region of the first display, receiving activation information of a second application from a second external device, and displaying an execution screen corresponding to the activation information of the second application on a second region of the first display.

Accordingly, the present disclosure provides the following effects and/or advantages: First of all, via the above-configured mobile terminal according to at least one embodiment of the present disclosure, a user may be able to conveniently share execution screens of a plurality of application with an external device. Secondly, an application, of which execution screen will be displayed via an external device, can be selected by a simple manipulation. Thirdly, display states of a plurality of applications currently shared with an external device can be conveniently changed or controlled.

According to one embodiment of the present disclosure, the above-described methods can be implemented in a program recorded medium as processor-readable codes. The processor-readable media include all kinds of recording devices in which data readable by a processor are stored. The processor-readable media include ROM, RAM, CD-ROM, magnetic tapes, floppy discs, optical data storage devices, or the like for example and also include carrier-wave type implementations (e.g., transmission via Internet).

Any reference in this specification to "one embodiment," "an embodiment," "example embodiment," etc., means that a particular feature, structure, or characteristic described in connection with the embodiment is included in at least one embodiment of the disclosure. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of controlling a mobile terminal, comprising:
establishing (S510) a connection to an external display;
displaying an execution screen of a first application on a display of the mobile terminal;
displaying (S530) an image of the execution screen of the first application in a first region on the external display, wherein the first region is a center region of the external device;
receiving (S540) a command to add an application for image sharing;
displaying a graphical user interface on the display of the mobile terminal in response to the command, the graphical user interface enabling a user to select an application to be added to the external display;
displaying an image of the graphical user interface in the first region on the external display, wherein the image of the execution screen of the first application is moved from the first region to a second region on the external display;
upon selection (S560) of a second application from the graphical user interface, displaying an execution screen of the selected second application on the display of the mobile terminal to replace the graphical user interface; and
displaying (S570) an image of the execution screen of the selected second application in the first region on the external display and the image of the execution screen of the first application in the second region on the external display.

2. The method of claim 1,
wherein the graphical user interface is a home screen.

3. The method of claim 1 or 2,
wherein the command is an input received through a button on a body or on the display of the mobile terminal.

4. The method of claim 1,
wherein the first region includes a full screen image of the execution screen of the first application and the second region is an overlay window displayed over the first region.

5. The method of claim 1,
wherein the first region and the second region do not overlap each other on the external display.

6. The method of any one of claims 1, 4 and 5,
wherein at least one of a position, size, or orientation of the first and second application window is changed based on an input at the mobile terminal.

7. The method of claim 1, further comprising the steps of:
detecting a change in an inclination of the mobile terminal; and
changing a position of the second region within the first region to correspond to the detected change in inclination.

8. The method of claim 1, further comprising the steps of:
detecting a change in an inclination of the mobile terminal; and
switching positions of the first and second regions between each other based on the detected change in inclination.

9. The method of claim 8,
wherein the changing the position of the first and second regions includes detecting a selection of a prescribed button on the mobile terminal.

10. A mobile terminal (100) configured to carry out the method according to any one of the preceding claims.

## Patentansprüche

1. Verfahren zum Steuern eines mobilen Endgeräts, umfassend:
Herstellen (S510) einer Verbindung mit einer externen Anzeige;
Anzeigen eines Ausführungsbildschirms einer ersten Anwendung auf einer Anzeige des mobilen Endgeräts;
Anzeigen (S530) eines Bildes des Ausführungsbildschirms der ersten Anwendung in einem ersten Bereich der externen Anzeige, wobei der erste Bereich ein Zentralbereich der externen Anzeige ist;
Empfangen (S540) eines Befehls, eine Anwendung zur gemeinsamen Nutzung (sharing) von Bildern hinzuzufügen;
Anzeigen einer grafischen Benutzerschnittstelle auf der Anzeige des mobilen Endgeräts in Erwiderung auf den Befehl, wobei die grafische Benutzerschnittstelle es einem Benutzer ermöglicht, eine Anwendung auszuwählen, um sie zu der externen Anzeige hinzuzufügen;
Anzeigen eines Bildes auf der grafischen Benutzerschnittstelle in dem ersten Bereich der externen Anzeige, wobei das Bild des Ausführungsbildschirms der ersten Anwendung von dem ersten Bereich zu einem zweiten Bereich auf der externen Anzeige bewegt wird;
aufgrund einer Auswahl (560) einer zweiten Anwendung von der grafischen Benutzerschnittstelle, Anzeigen eines Ausführungsbeispiels der ausgewählten zweiten Anwendung auf der Anzeige des mobilen Endgeräts, um die grafische Benutzerschnittstelle zu ersetzen; und
Anzeigen (US 570) eines Bildes des Ausführungsbildschirms der ausgewählten zweiten Anwendung in dem ersten Bereich auf der externen Anzeige und des Bildes des Ausführungsbildschirms der ersten Anwendung in dem zweiten Bereich auf der externen Anzeige.

2. Verfahren gemäß Anspruch 1, wobei die grafische Benutzerschnittstelle ein Homescreen ist.

3. Verfahren gemäß Anspruch 1 oder 2, wobei der Befehl eine Eingabe ist, die durch, eine Taste an einem Körper oder auf der Anzeige des mobilen Endgeräts empfangen wird.

4. Verfahren gemäß Anspruch 1, wobei der erste Bereich ein Bild eines Vollbildschirms des Ausführungsbildschirms der ersten Anwendung ist und der zweite Bereich ein überlagerndes Fenster ist, das auf dem ersten Bereich angezeigt wird.

5. Verfahren gemäß Anspruch 1, wobei der erste Bereich und der zweite Bereich auf der externen Anzeige einander nicht überlappen.

6. Verfahren gemäß einem der Ansprüche 1, 4 und 5, wobei eine Position, Größe und/oder Ausrichtung des ersten und zweiten Anwendungsfensters basierend auf einer Eingabe an dem mobilen Endgerät geändert wird.

7. Verfahren gemäß Anspruch 1, des Weiteren die folgenden Schritte umfassend:
Erkennen einer Veränderung einer Neigung des mobilen Endgeräts; und
Verändern einer Position des zweiten Bereichs innerhalb des ersten Bereichs, um mit der erkannten Veränderung der Neigung übereinzustimmen.

8. Verfahren gemäß Anspruch 1, des Weiteren die folgenden Schritte umfassend:
Erkennen einer Veränderung einer Neigung des mobilen Endgeräts; und
Umschalten der Positionen des ersten und zweiten Bereichs zwischeneinander basierend auf der erkannten Veränderung der Neigung.

9. Verfahren gemäß Anspruch 8, wobei die Veränderung der Position des ersten und zweiten Bereichs ein Erkennen einer Auswahl einer vorgegebenen Taste des mobilen Endgeräts umfasst.

10. Mobiles Endgerät (100), das dazu eingerichtet ist, das Verfahren gemäß einem der vorangegangenen Ansprüche auszuführen.

## Revendications

1. Procédé de commande d'un terminal mobile, comprenant les étapes consistant à :
établir (S510) une connexion avec un affichage externe ;
afficher un écran d'exécution d'une première application sur un affichage du terminal mobile ;
afficher (S530) une image de l'écran d'exécution de la première application dans une première région sur l'affichage externe, dans lequel la première région est une région centrale du dispositif externe ;
recevoir (S540) une commande pour ajouter une application de partage d'image ;
afficher une interface utilisateur graphique sur l'affichage du terminal mobile en réponse à la commande, l'interface utilisateur graphique permettant à un utilisateur de sélectionner une application devant être ajoutée à l'affichage externe ;
afficher une image de l'interface utilisateur graphique dans la première région sur l'affichage externe, dans lequel l'image de l'écran d'exécution de la première application est déplacé de la première région à une deuxième région sur l'affichage externe ;
sur sélection (S560) d'une deuxième application à partir de l'interface utilisateur graphique, afficher un écran d'exécution de la deuxième application sélectionnée sur l'affichage du terminal mobile pour remplacer l'interface utilisateur graphique ; et
afficher (S570) une image de l'écran d'exécution de la deuxième application sélectionnée dans la première région sur l'affichage externe et l'image de l'écran d'exécution de la première application dans la deuxième région sur l'affichage externe.

2. Procédé selon la revendication 1,
dans lequel l'interface utilisateur graphique est un écran d'accueil.

3. Procédé selon la revendication 1 ou 2,
dans lequel la commande est une entrée reçue par l'intermédiaire d'un bouton sur un corps ou sur l'affichage du terminal mobile.

4. Procédé selon la revendication 1,
dans lequel la première région comprend une image en plein écran de l'écran d'exécution de la première application et la deuxième région est une fenêtre de recouvrement affichée sur la première région.

5. Procédé selon la revendication 1,
dans lequel la première région et la deuxième région ne se chevauchent pas l'une l'autre sur l'affichage externe.

6. Procédé selon l'une quelconque des revendications 1, 4 et 5,
dans lequel au moins l'une parmi une position, une taille ou une orientation des première et deuxième fenêtres d'application est changée sur la base d'une entrée au niveau du terminal mobile.

7. Procédé selon la revendication 1, comprenant en outre les étapes consistant à :
détecter un changement d'inclinaison du terminal mobile ; et
changer une position de la deuxième région à l'intérieur de la première région pour correspondre au changement d'inclinaison détecté.

8. Procédé selon la revendication 1, comprenant en outre les étapes consistant à :
détecter un changement d'inclinaison du terminal mobile ; et
commuter les positions des première et deuxième régions entre elles sur la base du changement d'inclinaison détecté.

9. Procédé selon la revendication 8,
dans lequel le changement de position des première et deuxième régions comprend la détection d'une sélection d'un bouton prescrit sur le terminal mobile.

10. Terminal mobile (100) configuré pour réaliser le procédé selon l'une quelconque des revendications précédentes.
